Europäisches Patentamt

European Patent Office

Office européen des brevets

(19)

(11) Publication number: **0 231 554 B1**

# (12) EUROPEAN PATENT SPECIFICATION

(45) Date of publication of patent specification: 26.06.91   (51) Int. Cl.⁵: **G03B 21/62**

(21) Application number: **86202351.2**

(22) Date of filing: **22.12.86**

(54) Transmission projection screen and method of manufacturing same.

(30) Priority: **10.01.86 NL 8600043**

(43) Date of publication of application:
**12.08.87 Bulletin 87/33**

(45) Publication of the grant of the patent:
**26.06.91 Bulletin 91/26**

(84) Designated Contracting States:
**DE FR GB IT NL SE**

(56) References cited:
**EP-A- 0 114 395**

(73) Proprietor: **N.V. Philips' Gloeilampenfabrieken
Groenewoudseweg 1
NL-5621 BA Eindhoven(NL)**

(72) Inventor: **Broer, Dirk Jan
c/o INT. OCTROOIBUREAU B.V. Prof. Holst-
laan 6
NL-5656 AA Eindhoven(NL)**
Inventor: **Zwiers, Renso Johannes Marinus
c/o INT. OCTROOIBUREAU B.V. Prof. Holst-
laan 6
NL-5656 AA Eindhoven(NL)**
Inventor: **Jochem, Cornelis Marinus Gerrit
c/o INT. OCTROOIBUREAU B.V. Prof. Holst-
laan 6
NL-5656 AA Eindhoven(NL)**

(74) Representative: **Pennings, Johannes et al
Internationaal Octrooibureau B.V. Prof. Hol-
stlaan 6
NL-5656 AA Eindhoven(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The invention relates to a method of manufacturing a transmission projection screen as claimed in claim 1, comprising a transparent substrate having a front surface which is provided with parallel ribs from which light issues during operation of the screen, the ribs being separated by grooves in which light-absorbing filaments are disposed.

Such a screen is used, for example, for displaying images or alphanumeric data which are projected onto the rear surface of the screen, for example, by a lens system with one or more cathode ray tubes or by a film projector. The transparent ribs on the front surface of the screen focus the light rays which are received from the rear side and which issue via the crests of the ribs. The grooves between the ribs remain dark. In order to avoid reflection of ambient light from both the front side and the rear side of the screen, which would reduce the contrast of the image to be displayed, a light-absorbing material is disposed in the grooves. It is known for this purpose to apply a black lacquer layer or to dispose black particles in the grooves. A disadvantage of such screens is the high degree of mechanical contact and, therefore optical contact between the ribs and the light-absorbing material, which causes light that should be reflected on the inside of the walls of the ribs to be absorbed, thereby reducing the light output of the screen.

United States Patent Specification US 4525029 describes a transmission projection screen and a method of manufacturing such a screen, in which method black wires for example, of yarn, metal or synthetic resin are introduced into the grooves. The black wires are inserted longitudinally into the grooves, and during and/or after insertion the wires are tautened to make sure that they lie in the grooves over their full length. The wires are fixed by means of, for example, adhesive. A disadvantage of such a screen is that it may be subject to warping, for example, due to changing ambient conditions, humidity being a particularly important factor.

It is an object of the invention to provide a transmission projection screen which is not, or not significantly subject to warping due to changes in humidity and/or temperature. For this purpose, it is an object of the invention to provide a transmission projection screen in which the light-absorbing filaments do not have to be tautened during or after their insertion in the grooves in the screen. A further object of the invention is to provide a transmission projection screen having an aesthetically attractive, smooth front surface. A particular object of the invention is to provide a transmission projection screen having a flat or substantially flat front surface, the light-absorbing filament lying deeply in the grooves over their full length so as not to catch the light issuing from the crests of the ribs.

This object is achieved in accordance with the invention by a method of manufacturing a transmission projection screen as described in the opening paragraph, which screen is further characterized in that the light-absorbing filaments are glass fibres.

Due to the great rigidity of glass, glass fibres can be inserted deeply into the grooves over their full length without being having to be tautened. The use of glass fibres results in an aesthetically attractive screen having straight and regular light-absorbing lines.

The surfaces of the glass fibre may be provided with, for example, a black layer. In particularly efficacious embodiment of the projection screen in accordance with the invention, the glass fibres consist of black glass.

The use of glass fibres has the additional advantage that the diameter of a glass fibre may be chosen within wide limits and may be adapted to the cross-sectional dimensions of the grooves in order to make sure that the glass fibre fits in the lower part of a groove, whilst having a sufficiently large diameter to substantially reduce the light reflection at the front side of the screen. By making sure that the contact area between the glass fibres and the walls of the grooves is small, it is possible to obtain only a marginal reduction in the light output of the screen.

An additional object of the invention is to provide a method of manufacturing a transmission projection screen, in which the light-absorbing filaments can be readily fixed in the grooves.

This object is achieved in accordance with the invention by a method which is characterized in that it comprises the following steps:
- covering a light-absorbing glass fibres with a synthetic resin cladding,
- disposing glass fibres clad with synthetic resin in the grooves of the screen, and
- subjecting the screen including the glass fibres to a treatment which causes the synthetic resin cladding to adhere to the walls of the grooves.

Such a treatment may consist in, for example, contacting the screen with the vapour of a solvent for the synthetic resin of the synthetic resin cladding.

In a very efficaceous embodiment of the method in accordance with the invention, the treatment whereby the synthetic resin cladding is made to adhere to the walls of the grooves is a heat treatment. In this case, the synthetic resin cladding consists of an adhesive whose adhesive action is obtained by heating and subsequent cooling, a so-called "hot-melt" adhesive. An important advantage of this embodiment of the method is that glass fibres may be used which are provided with a synthetic resin cladding in separate treatment and which at some later time, for example after storage, are used in the actual manufacture of the screen, which is usually carried out in a clean room. Consequently, chemicals such ad adhesive, solvents or black powdered material for providing the grooves of the projection screen with light-absorbing material do not have to be used in the clean room.

An exemplary embodiment of the screen and the method in accordance with the invention are explained in more detail with reference to the drawings, in which

Figures 1a and 1b are sectional views of a glass fibre respectively without and with a synthetic resin cladding, which fibre is suitable for use in a screen in accordance with the invention,

Figure 2 is a perspective sectional view of part of a substrate provided with ribs, for use in a screen in accordance with the invention, and

Figure 3 is a sectional view of part of a screen in accordance with the invention, a glass fibre being shown in one of the grooves.

Exemplary embodiment

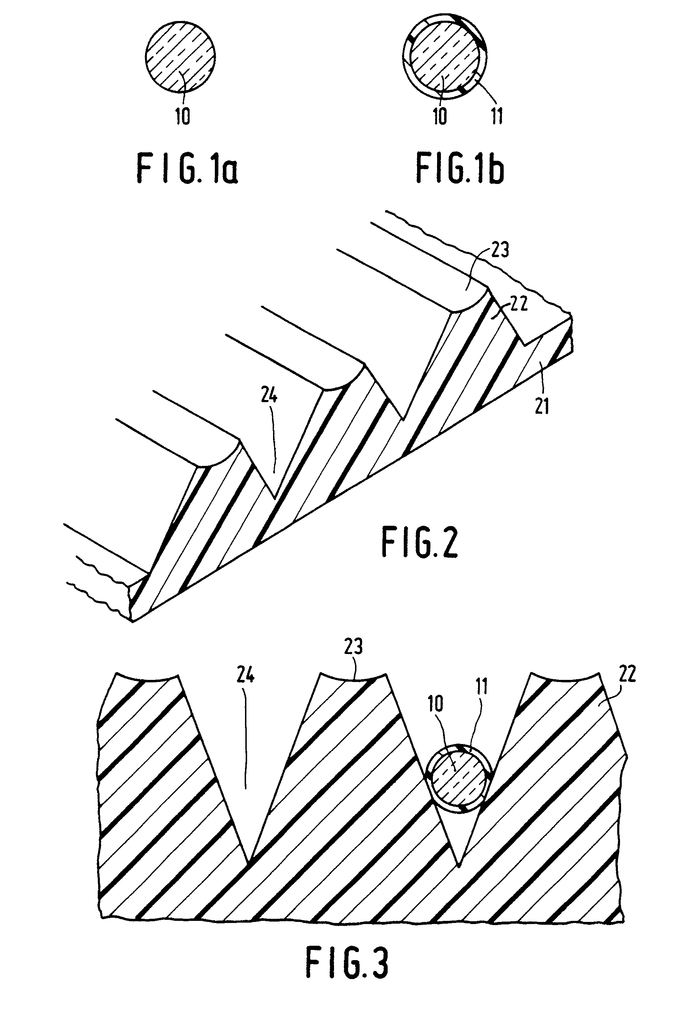

A glass fibre is manufactured in a way which is known per se, for example, by drawing from a preform or from molten glass contained in a crucible which has a discharge opening at the bottom. The glass composition is so selected that the glass fibre has a black colour. A suitable glass composition comprises, for example, 60.2% by weight of $SiO_2$, 16.8 % by weight of $B_2O_3$, 7.5 % by weight of $K_2O$, 3.3 % by weight of $Al_2O_3$, 0.4 % by weight of $Na_2O$, 0.8 % by weight of $Li_2O$, 2.7 % by weight of $V_2O_5$ and 8.3 % by weight of $Fe_2O_3$, which glass composition can be drawn from a preform into a fibre at a temperature of 675 ° C. The cross-section of the fibre may have any suitable shape, provided that it is selected so that the area of contact of the fibre with the wall of the groove into which it is subsequently inserted is small. To facilitate the insertion of the fibre, suitably, a fibre having a circular cross-section is used (see Figure 1a). The diameter of the fibre is such, for example, 100 $\mu$m in the present example, that the fibre can be disposed at the bottom of the grooves.

Preferably, immediately after the glass fibre is formed, it is clad with a layer of a synthetic resin composition. In Figure 1b a glass fibre 10 is shown whose entire surface is clad with a layer 11 of a polyamide, for example, Eurelon 2140®, which is marketed by Schering. In this example, the thickness of the cladding is 10 $\mu$m. If desired, the fibre may be only partially clad, for example, on one side, with such a layer. The polyamide is applied in a solution which contains 25 % by weight of polyamide in a solvent which consists of 65 % by weight of n-propanol, 20% by weight of toluene and 15 % by weight of water. The solution is applied by means of low-pressure extrusion after which the glass fibre is fed through an oven at a temperature of 200 ° C which causes the solvent to evaporate, leaving a polyamide layer on the glass fibre.

Figure 2 shows part of a substrate 21, for example, of polymethylmethacryalte, provided with parallel ribs 22 on its front surface. The screen shown in the drawing is flat, but the invention may also be applied to a slightly curved screen. The ribs 22 are provided at their crest with a lens structure 23. However, dependent upon the desired optical characteristic of the screen, the crests of the ribs may have various shapes. The ribs 22 are separated by groove 24 of V-shaped cross-section. The ribs and the grooves may be formed on the surface of the substrate by means of, for example, a replication technique which is known per se, from for example, a synthetic resin composition which can be cured by UV light. The rear surface of the substrate (not shown in the drawing) may also be provided with an optical element, for example, a fresnel structure. In this embodiment, the pitch of the parallel grooves, i.e. the distance between the adjacent grooves at their deepest points is 275 $\mu$m, and the depth of the grooves is 440 $\mu$m.

Figure 3 is a sectional view of a glass fibre 10 which has a synthetic resin cladding 11 and which is located at the bottom of one of the V-section grooves 24. After placing glass fibres in all the appropriate grooves on the screen, preferably one fibre in each groove, the synthetic resin is heated to a temperature of 180 ° C for a short time, for example 1 minute, and subsequently cooled to room temperature. The heating is carried out by, for example, radiation having a wavelength such that the radiation is absorbed by the black glass fibres but not by the transparent substrate. Thus, the bond between the glass fibres and the walls of the grooves is formed.

If desired, a reflective layer may be applied to the walls of the grooves in order to facilitate the internal reflection of the light in the ribs. In that case, the light-absorbing glass fibres are bonded to the rear surface of the reflective layer.

A screen manufactured in accordance with the method described herein has an attractive appearance and is evenly blackened. The black bands are resistant to wear and to rubbing and cleaning using cleaning agents. The glass fibres impart a greater rigidity to the screen which is resistant to the action of moisture, such that, in particular, the tendency of the screen to warp is reduced.

## Claims

1. A method of manufacturing a transmission projection screen comprising a transparent substrate having a front surface which is provided with parallel ribs from which light issues during operation of the screen, the ribs being separated by grooves in which light-absorbing filaments are disposed, characterized in that the method comprises the following steps:
   - covering light-absorbing glass fibres with a synthetic resin cladding,
   - disposing said glass fibres in the grooves of the screen, and
   - subjecting the screen including the glass fibres to a treatment which causes the synthetic resin cladding to adhere to the walls of the grooves.

2. A method as claimed in claim 1, characterized in that the treatment whereby the synthetic resin cladding is made to adhere to the walls of the grooves is a heat treatment.

3. A method as claimed in claim 1 or 2, characterized in that the glass fibres consist of black glass.

## Revendications

1. Procédé pour la fabrication d'un écran de projection à transmission comportant un substrat transparent présentant une surface frontale munie de nervures parallèles dont sort de la lumière pendant le fonctionnement de l'écran, les nervures étant séparées par des sillons dans lesquels sont disposés des filaments absorbant la lumière, caractérisé en ce qu'il comprend les étapes suivantes:
   - enveloppement des fibres en verre absorbant la lumière d'un revêtement en matière synthétique,
   - disposition desdites fibres en verre dans les sillons de l'écran et
   - soumettre l'écran contenant les fibres en verre à un traitement tel que le revêtement en matière synthétique adhère aux parois des sillons.

2. Procédé selon la revendication 1, caractérisé en ce que le traitement permettant de faire adhérer le revêtement en matière synthétique aux parois des sillons est un traitement thermique.

3. Procédé selon la revendication 1 ou 2, caractérisé en ce que les fibres en verre sont constituées par du verre noir.

## Ansprüche

1. Verfahren zum Herstellen eines Durchsichtprojektionsschirms mit einem transparenten Substrat mit einer Vorderfläche, die mit parallelen Rippen versehen ist, durch die bei Gebrauch des Schirms Licht hindurchgeht, wobei die Rippen durch Rillen voneinander getrennt sind, in denen lichtschluckende drahtförmige Elemente vorgesehen sind, **dadurch gekennzeichnet**, daß das Verfahren die folgenden Verfahrensschritte aufweist:
   - lichtschluckende Glasfasern werden mit einem Kunststoffmantel bedeckt,
   - diese Glasfasern werden in den Rillen des Schirms angeordnet, und
   - der Schirm samt Glasfasern werden einer Behandlung ausgesetzt, durch die der Kunststoffmantel an den Wänden der Rillen haftet.

2. Verfahren nach Anspruch 1, **dadurch gekennzeichnet**, daß die Behandlung, durch die der Kunststoffmantel an den Wänden der Rillen haftet eine Wärmebehandlung ist.

3. Verfahren nach Anspruch 1 oder 2, **dadurch gekennzeichnet**, daß die Glasfasern aus schwarzem Glas bestehen.

FIG.1a

FIG.1b

FIG.2

FIG.3